**Europäisches Patentamt**

**European Patent Office**

**Office européen des brevets**

(11) Veröffentlichungsnummer: **0 099 561**
A2

(12) # EUROPÄISCHE PATENTANMELDUNG

(21) Anmeldenummer: **83106987.7**

(22) Anmeldetag: **16.07.83**

(51) Int. Cl.³: **B 02 C 18/08**
B 02 C 23/04, B 02 C 18/16

(30) Priorität: **16.07.82 DE 3226676**

(43) Veröffentlichungstag der Anmeldung:
**01.02.84 Patentblatt 84/5**

(84) Benannte Vertragsstaaten:
**AT BE CH DE FR GB IT LI LU NL SE**

(71) Anmelder: **Samix-Umwelttechnik-Maschinenbau Ges.m.b.H.**
**Münchner Strasse 17-19**
**A-6330 Kufstein(AT)**

(72) Erfinder: **Lechner, Heinrich**
**Schopperweg 39**
**A-6330 Kufstein(AT)**

(72) Erfinder: **Waritsch, Helmut**
**Mozartstrasse 2**
**A-6330 Kufstein(AT)**

(72) Erfinder: **Koller, Josef**
**Oberndorf 136**
**A-6341 Ebbs(AT)**

(72) Erfinder: **Sonnerer, Herbert**
**Am Bach 11**
**A-6330 Schwolch(AT)**

(74) Vertreter: **Schwan, Gerhard, Dipl.-Ing.**
**Elfenstrasse 32**
**D-8000 München 83(DE)**

(54) **Vorrichtung zum Zerkleinern von Gut.**

(57) Vorrichtung zum wahlweisen Zerkleinern von schneid- oder häckselfähigem Gut, wie Laub, Rasenschnitt, Papier und dergleichen, sowie von span- order schnitzelfähigem Gut, wie dickeren Zweigen, Ästen und dergleichen. Die Vorrichtung weist eine mittig in einem Messergehäuse (17) aufrecht stehende, motorisch angetriebene Messerwelle (15), mit der Messer (21, 22, 23, 24, 55, 57) und Auswerferflügel (25, 29) drehfest verbunden sind, einen auf dem Mesergehäuse sitzenden Füllschacht (26) für das häckselfähige Gut und einen Einführstutzen (28) für das schnitzelfähige Gut auf. Der Einführstutzen ist unter Bildung eines spitzen Winkels mit der Messerwelle durch die Umfangswand (29) des Messergehäuses hindurchgeführt, und er endet dicht oberhalb einer Schnitzelmesseranordnung (21, 55, 57). Das Messergehäuse ist in eine Zerkleinerungsgut nur von dem Füllschacht übernehmende Häckselkammer (18) und eine darunter angeordnete, mit Zerkleinerungsgut nur über den Einführstutzen beschickbare Schnitzelkammer (19) unterteilt. Die Messerwelle trägt eine in der Häckselkammer rotierende Häckselmesseranordnung (22, 23, 24) sowie die in der Schnitzelkammer umlaufende Schnitzelmesseranordnung.

.../...

*Fig. 1*

DE-100

Samix-Umwelttechnik-Maschinenbau Ges.m.b.H.
Münchner Straße 17-19, A-6330 Kufstein/Österreich

Vorrichtung zum Zerkleinern von Gut

Die Erfindung betrifft eine Vorrichtung zum wahlweisen Zerkleinern von schneid- oder häckselfähigem Gut, wie Laub, Rasenschnitt, Papier und dergleichen,sowie von span- oder schnitzelfähigem Gut, wie dickeren Zweigen, Ästen und dergleichen, mit einer mittig in einem Messergehäuse aufrecht stehenden, motorisch angetriebenen Messerträgerwelle, mit der Messer und Auswerferflügel drehfest verbunden sind, einem auf dem Messergehäuse sitzenden Füllschacht für das häckselfähige Gut und einem Einführstutzen für das schnitzelfähige Gut, der unter Bildung eines spitzen Winkels mit der Messerwelle durch die Umfangswand des Messergehäuses hindurchgeführt ist und dicht oberhalb einer Schnitzelmesseranordnung endet.

Bei einer bekannten Vorrichtung dieser Art (DE-PS 2 934 792) sitzt am oberen Ende der Messerwelle eine Messerträgerscheibe, auf deren Oberseite Zerkleinerungsflügel zentral befestigt sind. Die Messerträgerscheibe ist mit radial verlaufenden Durchtrittsschlitzen und oberhalb davon mit Abstand hobelmesserartig angeordneten

- 2 -

Zerkleinerungsmessern versehen. Die Messerträgerscheibe und ihre Messer dienen gleichzeitig dem Häckseln wie dem Schnitzeln. Der Häckselgutstrom und das zu schnitzelnde Gut treffen sich auf der Oberseite der Messerträgerscheibe. Bei der bekannten Lösung ist die Beanspruchung der Messerträgerscheibe und ihrer Messer hoch. Die Standzeit der Messer ist entsprechend gering, und es ist schwierig, einen Kompromiß bei der Messerausbildung im Hinblick auf die von den Zerkleinerungsmessern zu erfüllende Häcksel- und Schnitzelfunktion zu finden.

Der Erfindung liegt die Aufgabe zugrunde, eine Zerkleinerungsvorrichtung zu schaffen, die den verschiedenartigen Anforderungen des Häcksel- und des Schnitzelvorganges besser gerecht wird, bei welcher die Messer eine größere Standzeit haben und die sich durch besonders hohe Betriebssicherheit auszeichnet.

Zur Lösung dieser Aufgabe ist erfindungsgemäß das Messergehäuse in eine Zerkleinerungsgut nur von dem Füllschacht übernehmende Häckselkammer und eine darunter angeordnete, mit Zerkleinerungsgut nur über den Einführstutzen zu beschickende Schnitzelkammer unterteilt, und die Messerwelle trägt eine in der Häckselkammer rotierende Häckselmesseranordnung sowie die in der Schnitzelkammer umlaufende Schnitzelmesseranordnung.

Ist in der Praxis viel Schnitzelarbeit auszuführen, wird die Schnitzelmesserschneide stark belastet. Bei der Vorrichtung nach der Erfindung bleibt davon aber die Häckselmesseranordnung unbeeinflußt, weil Häckselarbeiten einerseits und Schnitzelarbeiten andererseits in gesonderten Kammern mit getrennten Werkzeugen durchgeführt werden. Es reicht in einem solchen Fall aus, die Schnitzelmesseranordnung erforderlichenfalls auszutauschen oder

- 3 -

zu schärfen. Das Schnitzelgut belastet nicht die Häcksel- messeranordnung, während umgekehrt das Häckselgut nicht mit den Schnitzelmessern zusammentrifft. Die Häckselmesser und die Schnitzelmesser können an die von ihnen jeweils durchzuführende Arbeit optimal angepaßt werden.

Im Interesse eines einfachen Aufbaus der Gesamtanordnung stehen vorzugsweise die Häckselkammer und die Schnitzel- kammer mit einem gemeinsamen Auswurfstutzen in Verbindung, der zweckmäßig unterhalb der Häckselmesseranordnung in das Messergehäuse einmündet, so daß das Auswerfen minde- stens des Häckselgutes, vorteilhaft aber auch des Schnitzelgutes, durch die Schwerkraft unterstützt wird. Die beiden Kammern sind zweckmäßig durch einen gehäusefesten Zwischenboden voneinander getrennt, obwohl es grundsätzlich auch möglich ist, einen aus dem Messergehäuse herausziehbaren Zwischenboden vorzuziehen. Der Zwischenboden kann vorteilhaft die Lagerung für die Messerwelle tragen. Auf diese Weise wird der Axialabstand sowohl der Häcksel- messer als auch der Schnitzelmesser von der Lagerung relativ klein, was seinerseits in erwünschter Weise die auf die Messerwelle ausgeübten Biegemomente begrenzt.

In weiterer Ausgestaltung der Erfindung ist der die beiden Kammern trennende Zwischenboden im Bereich der Über- gangsstelle zwischen Messergehäuse und Auswurfstutzen unter Vergrößerung des Gutauslasses der Häckselkammer abge- senkt. Auf diese Weise wird einem Aufbau des oft relativ losen Häckselgutes in der Häckselkammer entgegengewirkt; es wird ein besonders guter Ausräumeffekt erzielt. Aus- werferflügel sind zweckmäßig in der Häckselkammer und/ oder der Schnitzelkammer angeordnet. Die Auswerferflügel sitzen zweckmäßig unmittelbar über dem die Kammern tren- nenden Zwischenboden und/oder unter dem Schnitzelmesser.

- 4 -

Entsprechend einem weiteren Merkmal der Erfindung, das grundsätzlich nicht auf eine Anwendung bei dem vorstehend geschilderten Zweikammersystem beschränkt ist, trägt die Messerwelle Lüfterflügel zur Ausübung eines Soges auf das in das Messergehäuse einlaufende Gut. In der Praxis hat sich nämlich gezeigt, daß auf Grund der hohen Drehzahl der Messerwelle (z. B. 3000 $min^{-1}$) ohne besondere Vorkehrungen immer wieder Gutteilchen nach oben aus dem Füllschacht oder dem Einführstutzen herausgeschleudert werden. Dies stellt eine nicht unerhebliche Gefahrenquelle dar. Diese wird durch die Verwendung von einen Sog ausübenden Lüfterflügeln wirkungsvoll ausgeräumt. Die Lüfterflügel ziehen das Gut nach unten. Sie verhindern damit nicht nur ein Herausschleudern von Teilchen aus der Vorrichtung, sondern gewährleisten auch einen verbesserten Einlauf insbesondere von leichtem Material, wie Gras, in das Messerwerk. Vorzugsweise sind die Auswerferflügel selbst als Lüfterflügel ausgebildet. Durch eine entsprechende Schränkung der Auswerferflügel läßt sich die gewünschte Sogwirkung erzielen, ohne daß es zusätzlicher Bauteile bedarf.

Wenn die Messerwelle in an sich bekannter Weise über einen Keilriemen und eine auf der Messerwelle befestigte Keilriemenscheibe angetrieben ist, sitzt vorzugsweise die Keilriemenscheibe der Messerwelle innerhalb der Schnitzelkammer zwischen der Messerwellenlagerung und der Schnitzelmesseranordnung. Durch den Angriff des Keilriemens in geringem Abstand von der Lagerung der Messerwelle werden die vom Antrieb auf die Messerwelle übertragenen Biegemomente minimiert. Bei Antrieb über Keilriemen oder dergleichen sind die Häckselmesseranordnung und die Schnitzelmesseranordnung vorteilhaft auf die gegenüberliegenden Enden der Messerwelle lösbar aufgesetzt. Sie lassen sich auf diese Weise voneinander unabhängig problemlos auswechseln.

- 5 -

Der Antriebsmotor kann aber z.B. auch, um zu einem besonders kompakten Aufbau zu kommen, unter dem Messergehäuse sitzen und an die Messerwelle unmittelbar angeflanscht sein.

Die Häckselmesseranordnung weist zweckmäßig einen Vorzerkleinerer und mindestens eine Flachmessergruppe auf, die in in Abstand voneinander angeordneten Ebenen rotieren. Als besonders günstig hat es sich erwiesen, mindestens zwei in unterschiedlichen Ebenen rotierende Flachmessergruppen vorzusehen. Das Häckselgut wird auf diese Weise während seines Durchlaufs durch die Häckselkammer in mehreren Ebenen zerkleinert. Die Zerkleinerungswirkung wird dadurch optimiert.

Die Schnitzelmesseranordnung kann als Flachmesser oder Flachmessersatz ausgebildet sein. In diesem Fall ist vorteilhaft in vorbestimmtem Abstand unterhalb des untersten Endes des Einführstutzens und der Bewegungsbahn der Schnitzelmesseranordnung ein gehäusefester Schnittbegrenzungsanschlag angeordnet. Dieser verhindert übermäßig große Schnittlängen. Eine entsprechende Wirkung kann auch dadurch erzielt werden, daß die Schnitzelmesseranordnung eine Messerscheibe mit Durchtrittsschlitzen für das Schnitzelgut aufweist.

Um im Falle von auf gegenüberliegenden Messerwellenenden lösbar aufgesetzten Messern an das Schnitzelmesser bequem heranzukommen, ist die Schnitzelkammer zweckmäßig mit einem abklappbaren oder abnehmbaren Boden ausgestattet. Bei an die Messerwelle angeflanschtem Antriebsmotor kann dagegen der Antriebsmotor z. B. am Boden der Schnitzelkammer aufgehängt und der übrige Teil des Messergehäuses mit dem Schnitzelkammerboden lösbar verbunden sein.

- 6 -

Die Umfangswand der Häckselkammer trägt vorzugsweise einen nach innen vorspringenden Häckselgut-Rückhalter, beispielsweise in Form eines an der Innenwand der Häckselkammer befestigten Rings und/oder Rückhaltenasen, um ein Hindurchfallen des Gutes durch die Häckselkammer zu verhindern, solange das Gut noch nicht ausreichend zerkleinert ist.

An der Innenseite der Umfangswand der Häckselkammer sitzt ferner in Höhe der Häckselmesseranordnung vorteilhaft mindestens eine nach innen vorspringende Nase, die verhindert, daß das Häckselgut von der Häckselmesseranordnung nur zu einer Drehbewegung veranlaßt, statt wirkungsvoll zerkleinert wird. Zur Verbesserung der Zerkleinerungswirkung kann diese Nase zweckmäßig als Gegenmesser ausgebildet sein, das vorzugsweise austauschbar und/oder um 180° wendbar angebracht ist.

Ein Teil der Umfangswand des Messergehäuses kann aufklappbar ausgebildet sein, um leicht an das Messerwerk heranzukommen und dieses sowie die Messerkammer gründlich reinigen zu können. Bei einer solchen Ausführungsform ist zweckmäßig der Auswurfstutzen an dem aufklappbaren Teil der Umfangswand des Messergehäuses befestigt. Dadurch wird beim Aufklappen zusätzlich zu dem Messergehäuse auch das eintrittsseitige Ende des Auswurfstutzens zugänglich. Im Interesse erhöhter Betriebssicherheit ist dabei eine das Drehen der Welle bei geöffnetem Messergehäuse verhindernde Sicherung vorgesehen. Statt dessen oder zusätzlich kann der Füllschacht abklappbar sein, wobei analog eine das Drehen der Messerwelle bei Abklappen des Füllschachts verhindernde Sicherung vorhanden ist.

Als Sicherung eignet sich insbesondere ein beim Aufklappen des Umfangswandteils und/oder beim Abklappen des Füll-

schachts selbsttätig ansprechender Endschalter zum Ausschalten des Antriebs der Zerkleinerungsvorrichtung. Zwecks weiterer Steigerung der Betriebssicherheit ist vorzugsweise der Endschalter mit einer mechanischen Verriegelung des aufklappbaren Umfangswandungsteils und/oder des Füllschachts derart gekoppelt, daß der Endschalter im Sinne einer Stillsetzung des Antriebes anspricht, bevor die Verriegelung den Füllschacht freigibt. Es kann aber auch eine Sicherung in Form eines mechanischen Anschlags vorgesehen werden, der durch Öffnen des Messergehäuses oder Füllschachts in die Bewegungsbahn eines mit der Messerwelle mitrotierenden Gegenanschlags einschwenkbar ist.

Um einen kontrollierten Zustrom des Häckselgutes zu der Häckselmesseranordnung auch bei der Verarbeitung von Gut mit stark unterschiedlicher Konsistenz zu gewährleisten, ist zweckmäßig mindestens ein um eine einstellbare Quer- und/oder Längsstrecke in den Füllschacht hineinreichendes Regulierelement vorgesehen, das mit Bezug auf den Füllschacht verschiebbar und in der gewünschten Stellung arretierbar geführt ist. Das Regulierelement kann als Regulierstab ausgebildet sein, dessen Längsachse nach unten in Richtung auf das Messerwerk geneigt ist und in der waagrechten Projektion tangential zu einem zur Messerwelle konzentrischen gedachten Kreis verläuft, dessen Durchmesser kleiner als der Durchmesser des Vorzerkleinerers ist.

Die Vorrichtung kann schubkarrenartig ausgebildet sein. In einem solchen Fall ist vorzugsweise der Auswurf auf der Radseite angeordnet, wobei ein oder mehrere Räder am Auswurfstutzen angebracht sein können, insbesondere der Auswurfstutzen zwei Räder trägt und zusätzlich ein oder zwei Standbeine vorgesehen sind. Zum Verfahren der Vorrichtung braucht infolgedessen nicht in den zerkleinerten Guthaufen hineingetreten zu werden. Es wird eine besonders hohe Standfestigkeit erzielt. Bei riemengetriebener Messerwelle ist der Antriebsmotor, z. B. ein Elektromotor oder ein Benzinmotor, zweckmäßig auf der Griffseite angeordnet. Er läßt sich bedienen, ohne daß dabei das ausgeworfene Gut im Weg ist. Mit dem Gestell der Zerkleinerungsvorrichtung sind zweckmäßig zwei Griffstangen lösbar und/oder abklappbar verbunden. Lösbare Griffstangen sind vorteilhaft mit Bezug auf die Gestellängsrichtung umsteckbar. Zum Versand oder beim Abstellen der Zerkleinerungsvorrichtung auf beengtem Raum können die Griffstangen abgenommen bzw. abgeklappt werden. Beim Umstecken kommen die Griffe nahe dem Schwerpunkt der Vorrichtung zu liegen. Dies ist nützlich, wenn die Vorrichtung beispielsweise über Treppen getragen werden muß.

Die Erfindung ist im folgenden an Hand von bevorzugten Ausführungsbeispielen näher erläutert. In den beiliegenden Zeichnungen zeigen:

Fig. 1   eine teilweise aufgebrochene perspektivische Ansicht einer Zerkleinerungsvorrichtung nach der Erfindung,

Fig. 2   einen Teillängsschnitt durch die Vorrichtung nach Fig. 1,

Fig. 3   eine teilweise aufgebrochene perspektivische Ansicht einer abgewandelten Ausführungsform der Zerkleinerungsvorrichtung,

Fig. 4   einen Teillängsschnitt des Geräts nach Figur 3,

Fig. 5   eine Detailansicht der Anordnung nach den Fig. 3 und 4,

Fig. 6   eine perspektivische, aufgebrochene Teilansicht einer Zerkleinerungsvorrichtung mit Schnittlängenbegrenzung für das Schnitzelmesser,

Fig. 7   eine schematische, perspektivische, aufgebrochene Teilansicht einer abgewandelten Ausführungsform der Zerkleinerungsvorrichtung mit schnitzelmesserscheibe,

Fig. 8    einen Teillängsschnitt durch die Vorrichtung nach Fig. 7,

Fig. 9    einen Schnitt entlang der Linie IX-IX der Fig. 8,

Fig. 10    einen Teillängsschnitt durch eine weiter abgewandelte Zerkleinerungsvorrichtung mit austauschbarem Gegenmesser,

Fig. 11    einen Schnitt entlang der Linie XI-XI der Fig. 10,

Fig. 12    eine aufgebrochene perspektivische Teilansicht einer Zerkleinerungsvorrichtung nach der Erfindung mit abklappbarem Füllschacht und zugeordneter Drehsicherung,

Fig. 13    eine teilweise aufgebrochene, teilweise geschnittene Darstellung einer Zerkleinerungsvorrichtung mit abgewandelter Drehsicherung,

Fig. 14    eine perspektivische Teilansicht der Vorrichtung nach Fig. 13,

Fig. 15    eine aufgebrochene, perspektivische Teilansicht einer Zerkleinerungsvorrichtung mit Regulierstab im Füllschacht, und

Fig. 16    einen Schnitt entlang der Linie XVI-XVI der Fig. 15.

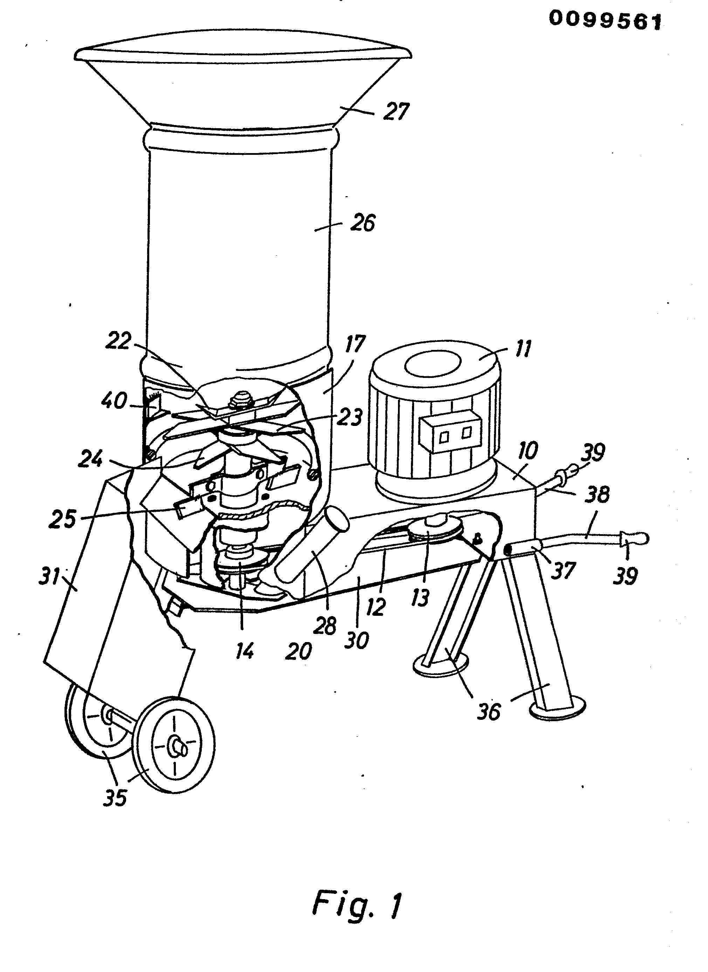

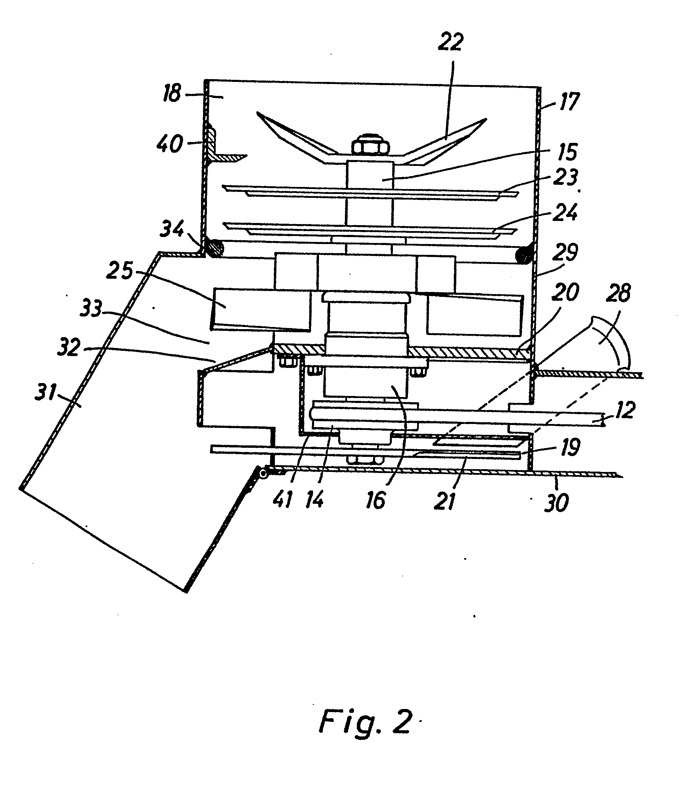

Die in den Figuren 1 und 2 veranschaulichte Vorrichtung ist vor allem zum Zerkleinern von Gartenabfällen bestimmt. Die Vorrichtung ist schubkarrenartig ausgebildet. Ein Gestell 10 trägt auf der Griffseite der Vorrichtung ein Antriebsaggregat, das im vorliegenden Fall als Elektromotor 11 dargestellt ist. Der Motor 11 treibt über einen Keilriemen 12 und Riemenscheiben 13, 14 eine Messerwelle 15 an. Die Messerwelle 15 ist in einer Lagerung 16 aufrecht stehend und mittig in einem Messergehäuse 17 angeordnet. Das Messergehäuse 17 ist in eine obere Häckselkammer 18 und eine darunterliegende Schnitzelkammer 19 unterteilt. Die Kammern 18, 19 werden durch einen Zwischenboden 20 voneinander getrennt. Die Lagerung 16 ist an dem Zwischenboden 20 befestigt, z. B. mit diesem verschweißt oder verschraubt. Auf das untere Ende der Messerwelle 15 ist ein Schnitzelmesser 21 lösbar aufgesetzt, während das obere Ende der Messerwelle eine abnehmbare Häckselmesseranordnung trägt. Die Häckselmesseranordnung besteht aus einem Vorzerkleinerer in Form eines Flügelmessers 22 und aus zwei Flachmessergruppen 23, 24. Das Flügelmesser 22 und die Flachmessergruppen 23, 24 arbeiten in Ebenen, die axial in Abstand voneinander liegen. Unterhalb der Häckselmesseranordnung sitzen unmittelbar über dem Zwischenboden 20 auf der Messerwelle 15 geschränkte Auswerferflügel 25 mit Turbowirkung.

Auf dem Messergehäuse 17 ist ein Füllschacht 26 mit Trichter 27 abnehmbar angebracht. Der Füllschacht 26 hat einen Durchmesser, der im wesentlichen gleich dem Durchmesser des Messergehäuses 17 ist. Häckselgut fällt aus dem Füllschacht 26 unbehindert in die Häckselkammer 18. Das Gut wird dort von den Flügelmessern 22 zunächst vorgehäckselt, um dann von den Flachmessergruppen 23, 24 weiter zerkleinert zu werden. Ein Einführstutzen 28 für schnitzelfähiges Gut, beispielsweise Äste, ist durch die Umfangswand 29 des Messergehäuses 17 im Bereich der Schnitzelkammer 19 hindurchgeführt. Der Stutzen 28 bildet dabei mit der Messerwelle 15 einen spitzen Winkel. Er endet dicht oberhalb des in der Schnitzelkammer 19 rotierenden Schnitzelmessers 21. Die Schnitzelkammer 19 ist unten mittels eines abklappbaren Bodens 30 abgeschlossen. Die Häckselkammer 18 und die Schnitzelkammer 19 stehen mit einem gemeinsamen Auswurfstutzen 31 in Verbindung. Dabei ist der Zwischenboden 20 im Bereich 32 der Übergangsstelle zwischen dem Messergehäuse 17 und dem Auswurfstutzen 31 derart abgesenkt, daß ein vergrößerter Gutauslaß 33 aus der Häckselkammer 18 entsteht.

Häckselgut wird von den Auswerferflügeln 25 durch den Gutauslaß 33 hindurch in den Auswurfstutzen 31 befördert. Die als Lüfterflügel ausgebildeten Auswerferflügel 25 üben dabei einen Sog auf das über den Trichter 27 und den Füllschacht 26 eingebrachte Gut aus. Sie unterstützen damit den Zulauf des Gutes zu der Häckselkammer 18 und verhindern ein Herausschleudern von Partikeln aus dem Trichter 27. Geschnitzeltes Gut wird von dem Schnitzelmesser 21 in den Auswurfstutzen 31 geschleudert.

Dicht unterhalb der unteren Flachmessergruppe 24 befindet sich ein Ring 34, der mit der Innenseite der Umfangswand 29 des Messergehäuses 17 verschweißt ist. Der Ring 34 wirkt als Häckselgut-Rückhalter. Er verhindert einen vorzeitigen Übertritt von Häckselgut aus der Häckselkammer 18 in den Auswurfstutzen 31. Anstelle des Ringes 34 kann auch eine Reihe von Rückhaltenasen oder dergleichen vorgesehen sein. In Höhe der Häckselmesseranordnung 22, 23, 24 trägt das Messergehäuse 17 ferner eine nach innen vorstehende Nase 40, die einer Rotationsbewegung des Häckselgutes in der Häckselkammer entgegenwirkt. Der Riemen 12 und die Riemenscheibe 14 sind innerhalb der Schnitzelkammer 19 durch einen Riemenschutz 41 abgedeckt.

Räder 35 sind am unteren Ende des Auswurfstutzens 31 montiert. Am gegenüberliegenden Ende des Gestells 10 sind zwei Standbeine 36 befestigt. Das Gestell 10 trägt in diesem Bereich zu beiden Seiten je eine Aufnahmehülse 37 für Griffstangen 38, mittels deren das Gestell 10 angehoben werden kann, um das Gerät schubkarrenartig zu verfahren. Zu Verpackungszwecken lassen sich Füllschacht 26 und Trichter 27 sowie die Griffstangen 38 abnehmen und unterhalb des Gestells 10 zwischen dem Auswurfstutzen 31 und den Standbeinen 36 verstauen. Werden die Griffstangen 38, anders als in Fig. 1 dargestellt, von der Seite des Auswurfstutzens 31 aus in die Aufnahmehülsen 37 gesteckt, befinden sich die Griffe 39 nahe dem Schwerpunkt des Gerätes, das dann z. B. bequem über Treppen getragen werden kann.

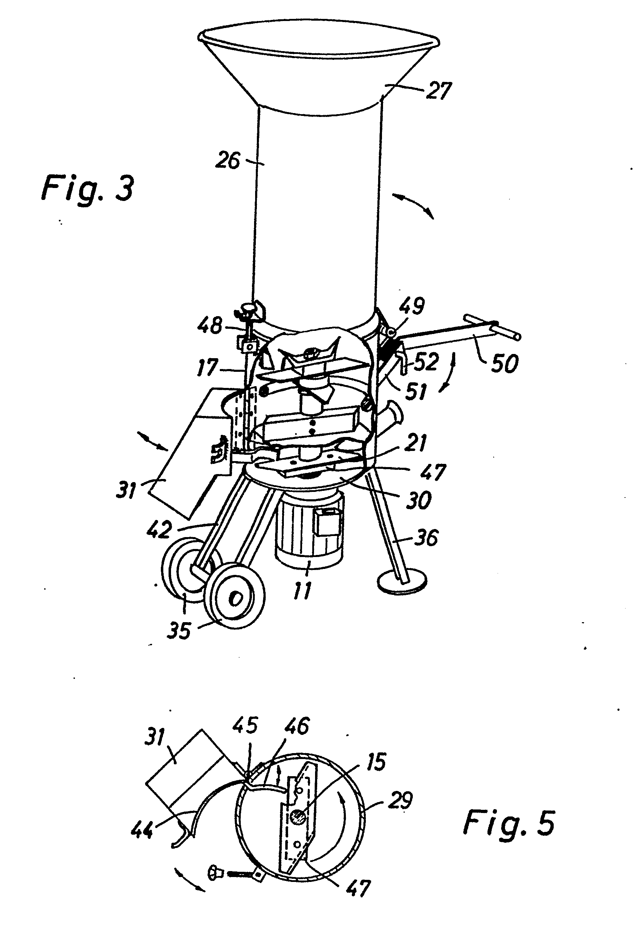

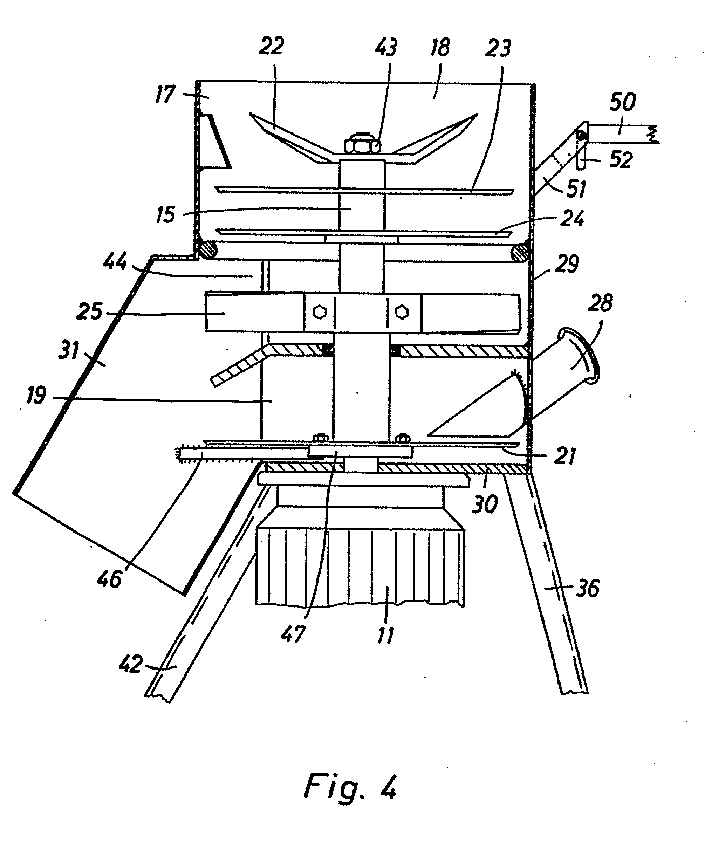

Die in den Figuren 3 bis 5 veranschaulichte Ausführungsform unterscheidet sich von der Vorrichtung gemäß den Fig. 1 und 2 im wesentlichen dadurch, daß der Antriebsmotor 11 am Boden 30 der Schnitzelkammer 19 aufgehängt und an die Messerwelle 15 unmittelbar angeflanscht ist. Der Schnitzelkammerboden 30 ist in diesem Fall mit einem Standbein 36 und einem zwei Räder 35 tragenden Rahmen 42 verbunden. Nach Lösen einer Mutter 43 lassen sich das Flügelmesser 22 und die Flachmessergruppen 23, 24 von der Messerwelle 15 abziehen. In entsprechender Weise können auch die als Lüfterflügel ausgebildeten Auswerferflügel 25 abgenommen werden. Um im Bedarfsfall auch das Schnitzelmesser 21 auswechseln zu können, ist die Umfangswand 29 des Messergehäuses 17 mit dem Schnitzelkammerboden 30 in nicht näher dargestellter Weise, z. B. über drei Schrauben, lösbar verbunden. Nach Abnahme der Umfangswand 29 vom Boden 30 läßt sich auch das Schnitzelmesser 21 von der Messerwelle 15 abziehen.

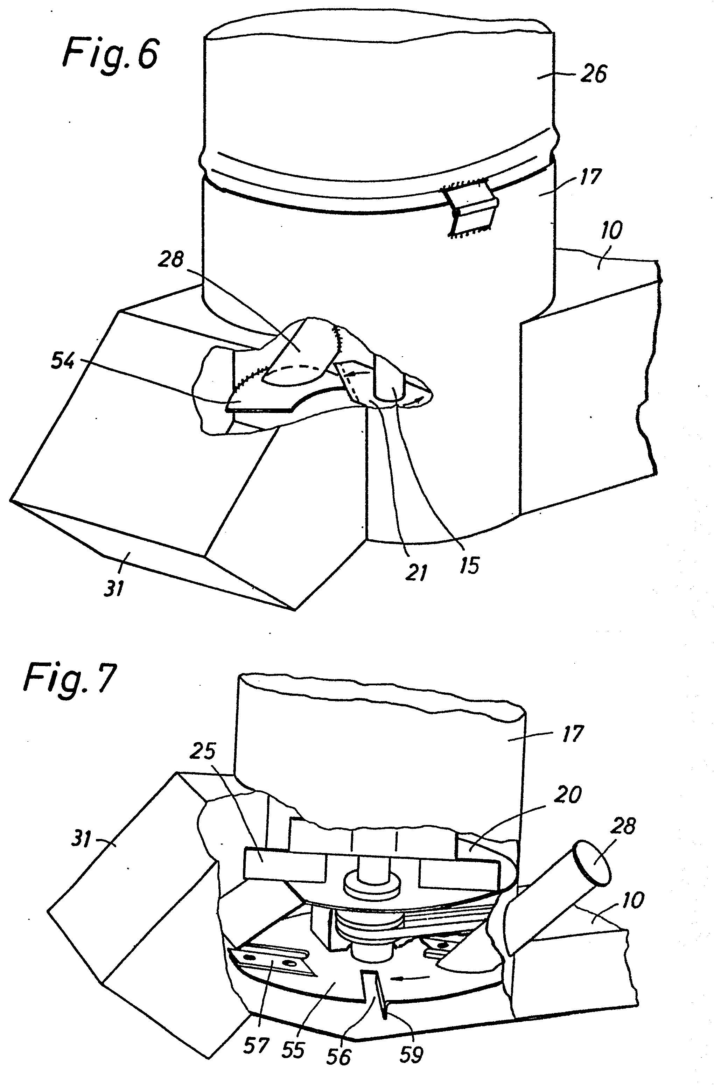

Ein Teil 44 der Umfangswand 29, der den Auswurfstutzen 31 trägt, ist mit dem übrigen Teil des Messergehäuses 17 über ein Scharnier 45 verbunden;er läßt sich aufklappen, wie dies in Fig. 3 schematisch angedeutet ist. Auf diese Weise läßt sich das Innere des Messergehäuses bequem reinigen. Mit der aufklappbaren Anordnung 31, 44 ist ein Anschlag 46 (Fig. 5) verbunden. Beim Öffnen des Messergehäuses 17 wird dieser Anschlag in die Bewegungsbahn eines mit der Messerwelle 15 mitrotierenden Gegenanschlags 47 eingeschwenkt. Der Gegenanschlag 47 wird von einer unter dem Schnitzelmesser 21 sitzenden und mit dem Schnitzelmesser fest verbundenen Versteifung gebildet. Bei geöffnetem Messergehäuse 17 wird dadurch ein Drehen der Messerwelle 15 verhindert. Öffnet der Benutzer das Messergehäuse, während die Messerwelle 15 noch rotiert, wirft der Gegenanschlag 47 durch Zusammenwirken mit dem Anschlag 46 den aufklappbaren Teil 44 der Umfangswand sofort wieder in die Schließstellung.

Der auf dem Messergehäuse 17 sitzende Füllschacht 26 läßt sich nach Lösen eines Niederhälters 48 um ein Gelenk 49 abschwenken, um die Häckselkammer 18 von oben zugänglich zu machen. Das Gerät kann über eine Griffstange 50 verfahren werden. Die Griffstange 50 steht mit dem Messergehäuse 17 über Streben 51 in Verbindung. Sie läßt sich nach Lösen einer Verriegelung 52 abklappen, wenn das Gerät verpackt oder auf begrenztem Raum abgestellt werden soll.

- 14 -

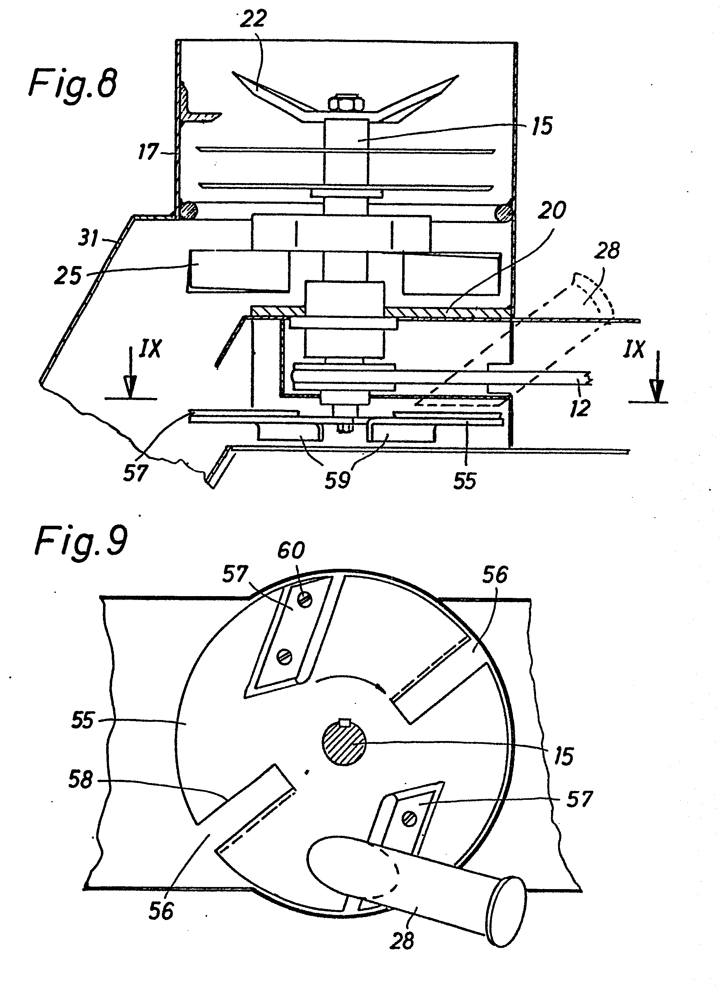

Bei der in Fig. 6 veranschaulichten Ausführungsform ist in vorbestimmtem Abstand unterhalb des unteren Endes des Einführstutzens 28 und des Schnitzelmessers 21 ein plattenförmiger Anschlag 54 für das über den Stutzen 28 zugeführte Schnitzelgut an der Innenwand des Messergehäuses 17 fest angebracht, z. B. angeschweißt. Der Anschlag 54 wirkt als Schnittbegrenzung, welche die Schnittlänge für den Schnitzelvorgang in der Schnitzelkammer 19 vorgibt. Der Anschlag 54 verhindert, daß sich langes Astmaterial in der Schnitzelkammer 19 verfängt und daß bei zu raschem Einziehen von Schnitzelgut unerwünscht große Aststücke abgeschlagen werden. Durch diese Vorschubsteuerung der Verschnitzelung wird auch das Schnitzelmesser 21 vor Beschädigungen geschützt.

Bei der abgewandelten Ausführungsform nach Fig. 7 wird die Schnitzelmesseranordnung von einer Messerscheibe 55 gebildet, die mit im wesentlichen radial verlaufenden Durchtrittsschlitzen 56 für das Schnitzelgut versehen ist und auf der in einem vorbestimmten Winkel zur Radialrichtung stehende Schnitzelmesser 57 auswechselbar angebracht, z.B. angeschraubt, sind. Die Messerscheibe 55 sitzt in vorbestimmtem Abstand unter dem unteren Ende des Einführstutzens 28, und sie übernimmt auf diese Weise zugleich die Funktion einer Schnittlängenbegrenzung ähnlich der anhand der Fig. 6 erläuterten Art. Zur Ausbildung der Durchtrittsschlitze 56 sind in der Messerscheibe 55 im wesentlichen L-förmige Schnitte 58 ausgebildet. Die dabei entstehenden Lappen sind nach unten im wesentlichen um 90° abgewinkelt; sie bilden Auswerfer- und/oder Lüfterflügel 59.

Bei der in den Figuren 7 und 9 gezeigten Ausführungsform sitzen die Durchtrittsschlitze 56 in Umfangsrichtung im wesentlichen in der Mitte zwischen aufeinanderfolgenden Schnitzelmessern 57. Es ist statt dessen auch möglich, in nicht veranschaulichter Weise die Durchtrittsschlitze unmittelbar angrenzend an die Schnitzelmesser auszubilden und als Auswerfer- und/oder Lüfterflügel von der Unterseite der Messerscheibe 55 nach unten stehende Winkel vorzusehen, die mit den gleichen Befestigungsmitteln, z. B. Schrauben 60 (Fig. 9), wie die Schnitzelmesser 57 fixiert sind.

Die Messerscheibe 55 hat eine im Vergleich zu dem als Flachmesser ausgeführten Schnitzelmesser 21 größere Schwungmasse, was dazu beiträgt, stoßartige Belastungen beim Häcksel- wie beim Schnitzelvorgang auszugleichen.

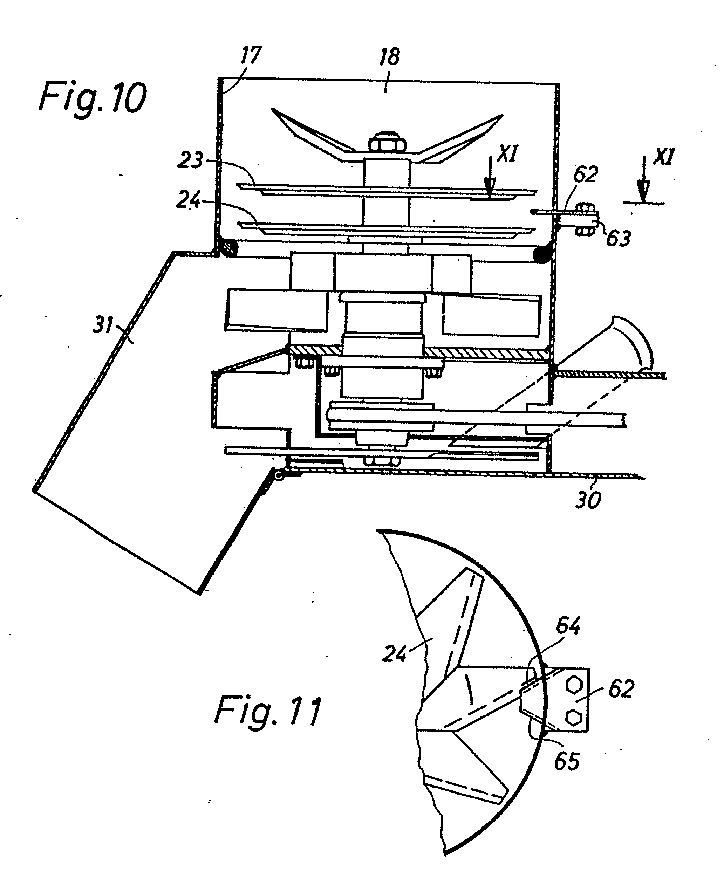

Im Falle der Ausführungsform nach den Figuren 10 und 11 ist die fest eingeschweißte Nase 40 der Fig. 2 durch ein austauschbares und um 180° wendbares Gegenmesser 62 ersetzt. Das Gegenmesser 62 ist auf einer Auflage 63 lösbar angebracht, z. B. verschraubt, die an der Außenseite des Messergehäuses 17 befestigt ist. Das Gegenmesser 62 ragt durch einen Schlitz der Messergehäusewand in die Häckselkammer 18 hinein. Es ist in diesem Bereich beidseits mit Schnittkanten 64 bzw. 65 versehen. Ist im Laufe der Zeit beispielsweise die Schnittkante 64 stumpf geworden, wird das Gegenmesser 62 gewendet, wodurch die Schnittkante 65 zum Einsatz kommt. Das Gegenmesser 62 trägt zu einer feinen Zerkleinerung des Häckselgutes wesentlich bei. Außerdem wirkt das Gegenmesser einem Rotieren des Häckselgutes entlang der Innenwand des Messergehäuses 17 entgegen. Sind beide Schnittkanten 64 und 65 stumpf geworden, kann das Gegenmesser 62 leicht abgenommen und gegen ein anderes ersetzt oder nachgeschliffen werden.

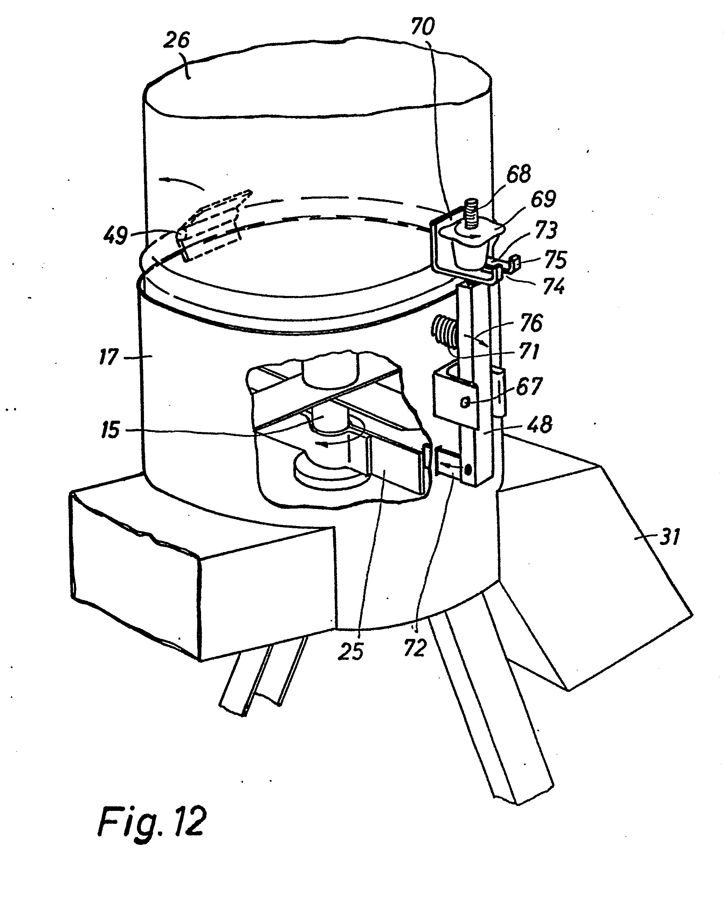

Bei der Ausführungsform nach Fig. 12 ist ein um ein Gelenk 67 verschwenkbarer Niederhalter 48 vorgesehen, dessen über

dem Gelenk 67 befindlicher Schenkel einen Schraubbolzen 68 trägt. Auf den Schraubbolzen 68 ist ein Schraubgriff 69 aufgeschraubt, der mit einem dem Gelenk 49 diametral gegenüberliegenden Winkelstück 70 an der Außenseite des abklappbaren Füllschachts 26 zusammenwirkt. Eine Vorspannfeder 71 stützt sich einerseits an der Außenseite des Messergehäuses 17 und andererseits am oberen Schenkel des Niederhalters 48 ab. Der unterhalb des Gelenks 67 liegende Schenkel des Niederhalters 48 trägt einen Anschlag 72, der durch einen Schlitz der Wand 29 des Messergehäuses 17 radial hindurchreicht. Der waagrechte Schenkel 73 des Winkelstücks 70 ist mit einem Radialschlitz 74 für den Durchtritt des Schraubbolzens 68 ausgestattet. Der Schenkel 73 ist an seinem radial außenliegenden Ende unter Bildung von Anschlägen 75 hochgebogen.

Um den Füllschacht 26 abzuklappen, wird der Schraubgriff 69 auf dem Schraubbolzen 68 nach oben gedreht. Der Schraubgriff 69 kommt dadurch außer Klemmeingriff mit der Oberseite des Schenkels 73. Die Vorspannfeder 71 drückt sofort nach Aufhebung der Klemmverbindung den Niederhalter 48 in Richtung des Pfeils 76. Dadurch wird einerseits der Schraubgriff 69 seitlich gegen die Anschläge 75 gedrückt. Andererseits wird der Anschlag 72 in die Bewegungsbahn der Auswerferflügel 25 verschoben. Damit wird ein Drehen der Messerwelle 15 verhindert, noch bevor durch weiteres Hochschrauben des Schraubgriffs 69 der Schraubgriff von den Anschlägen 75 freikommt und der Füllschacht 26 um das Gelenk 49 scharnierartig verwenkt werden kann.

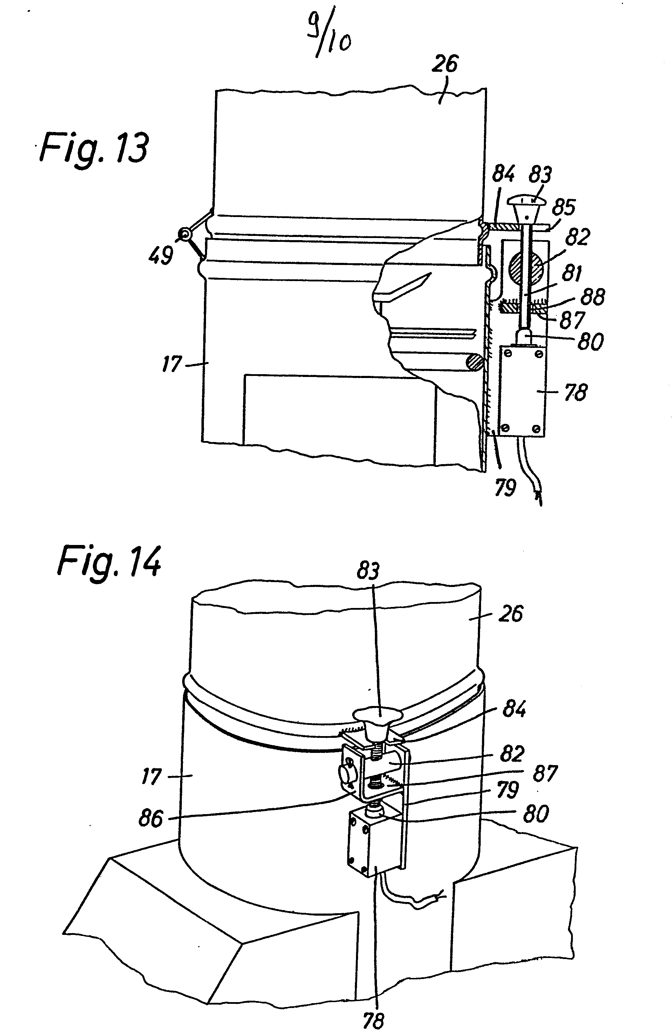

In den Figuren 13 und 14 ist eine abgewandelte Ausführungsform einer Drehsicherung dargestellt, die einen Endschalter 78 aufweist, der im Zuge der Vorbereitung des Abklappens des Füllschachts 26 selbsttätig anspricht. Der Endschalter 78 ist auf einer Trägerplatte 79 montiert, die an

der Außenseite des Messergehäuses 17 angebracht ist. Der Endschalter 78 weist einen Stellknopf 80 auf. Dieser wirkt mit dem unteren Ende einer Schraubspindel 81 zusammen. Die Schraubspindel 81 ist in eine Gewindebohrung eines Schwenklagers 82 eingeschraubt und trägt an ihrem oberen Ende einen Schraubgriff 83. Der Schraubgriff 83 legt sich im Schließzustand des Füllschachts 26 von oben gegen einen dem Gelenk 49 diametral gegenüberliegenden, nach außen vorstehenden Ansatz 84 des Füllschachts 26 an. Der Ansatz 84 ist mit einem Schlitz 85 für den Durchtritt der Schraubspindel 81 versehen. Das Schwenklager 82 ist in der Trägerplatte 79 und einem mit dieser fest verbundenen Winkelstück 86 drehbar gelagert. Das Winkelstück 86 weist einen in lotrechter Richtung zwischen dem Stellknopf und dem Schwenklager 82 liegenden waagrechten Schenkel 87 mit einer Bohrung 88 für den Durchtritt der Schraubspindel 81 auf.

Wenn der Füllschacht 26 abgeklappt werden soll, wird mittels des Schraubgriffs 83 die Schraubspindel 81 mit Bezug auf das Schwenklager 82 nach oben gedreht. Das untere Ende der Schraubspindel 81 gibt dabei den Stellknopf 80 des Endschalters 78 frei, während die Schraubspindel 81 an einer Schwenkbewegung um die Achse des Schwenklagers 82 noch durch den Eingriff zwischen der Schraubspindel 81 und dem Schenkel 87 gehindert ist. Der Endschalter 78 setzt den Antrieb still. Bei weiterem Hochschrauben der Schraubspindel 81 tritt das untere Ende der Schraubspindel aus der Bohrung 88 des Schenkels 87 aus. Erst jetzt läßt sich die Schraubspindel 81 um die Schwenklagerachse so weit verschwenken, daß der Schraubgriff 83 außer Eingriff mit dem Ansatz 84 kommt. Der Füllschacht 26 kann infolgedessen erst abgeklappt werden, nachdem zuvor der Antrieb stillgesetzt ist. Das Hochschrauben der Schraubspindel 81 von der Freigabe des Stellknopfes 80 bis zum Freikommen der Schraubspindel 81 von der Bohrung 88 erfordert eine gewisse Zeitspanne. Dies gewährleistet, daß die Messerwelle 15 auf jeden Fall zum Stillstand gekommen ist, wenn der Füllschacht 26 um das Gelenk 49 geschwenkt wird.

Wenn für den Antrieb der Messerwelle 15 ein Elektromotor vorgesehen ist, unterbricht der Endschalter 78 die Stromzufuhr zum Motor. Wird dagegen ein Benzinantriebsmotor benutzt, liegt der Endschalter 78 zweckmäßig im Zündspannungskreis, um die Zündspannung zu unterbrechen, bevor der Füllschacht 26 abgeklappt werden kann.

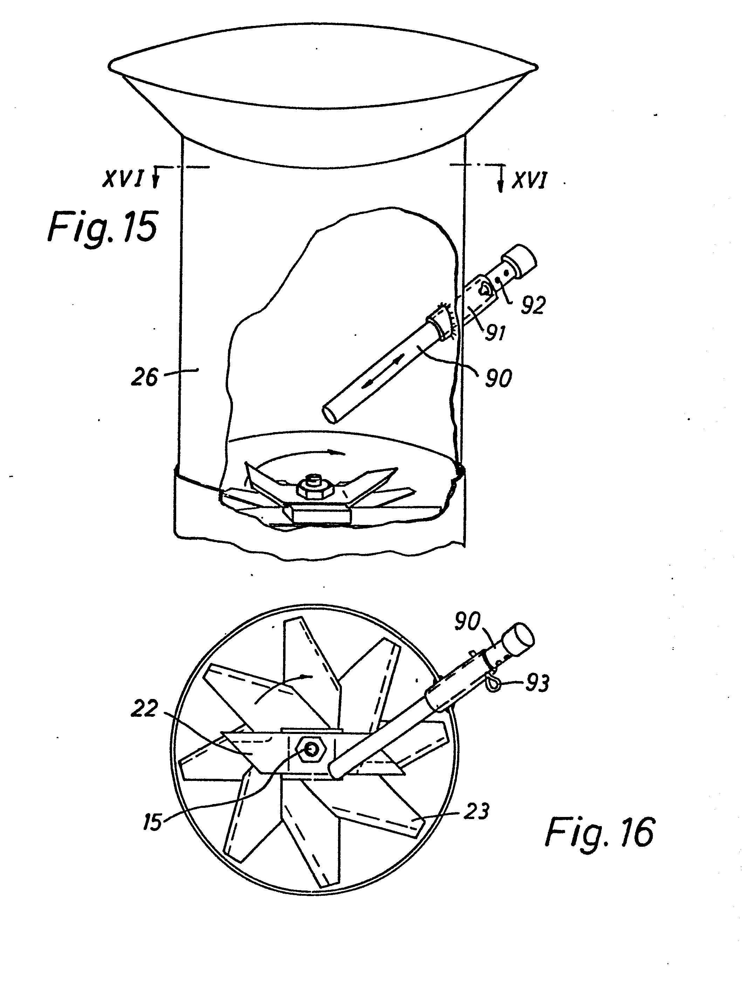

Das Häckselgut kann in seiner Beschaffenheit außerordentlich stark variieren. Besteht es aus trockenem, relativ losem Material, wie Stauden, dünnen Ästen oder dergleichen, können sich Schwierigkeiten dadurch ergeben, daß das Häckselgut von der Häckselmesseranordnung in Rotationsbewegung versetzt und dann nicht oder nur schlecht zerkleinert wird. Dem kann besonders wirkungsvoll dadurch begegnet werden, daß entsprechend den Figuren 15 und 16 ein Regulierstab 90 vorgesehen wird, der in einer durch die Wand des Füllschachts 26 hindurchreichenden Führungsbuchse 91 gelagert ist. Die Längsachse des Regulierstabs 90 ist nach unten in Richtung auf die Häckselmesseranordnung geneigt. Sie verläuft in der waagrechten Projektion tangential zu einem zur Messerwelle 15 konzentrischen gedachten Kreis, dessen Durchmesser kleiner als der Durchmesser des Flügelmessers 22 ist (Fig. 16). Bei relativ feuchtem Häckselgut, wie Grasschnitt oder feuchtem Laub, könnte der in den Füllschacht hineinreichende Regulierstab jedoch die Gefahr von Verstopfung mit sich bringen. Der Regulierstab 90 ist daher mit einer Reihe von in Längsrichtung des Regulierstabes gegeneinander versetzten Radialbohrungen 92 versehen, durch die ein in der Buchse 91 geführter Splint 93 hindurchgesteckt werden kann. Auf

- 19 -

diese Weise ist es möglich, den von dem Regulierstab 90
erzeugten Widerstand in Abhängigkeit von der Art und Konsistenz des Häckselgutes bedarfsweise zu dosieren. Dies
trägt nicht nur zu einem wirkungsvollen Verhäckseln, sondern auch zu erhöhter Betriebssicherheit bei.

DE-100

## A n s p r ü c h e

1. Vorrichtung zum wahlweisen Zerkleinern von schneid- oder häckselfähigem Gut, wie Laub, Rasenschnitt, Papier und dergleichen, sowie von span- oder schnitzelfähigem Gut, wie dickeren Zweigen, Ästen und dergleichen, mit einer mittig in einem Messergehäuse (17) aufrecht stehenden, motorisch angetriebenen Messerwelle (15), mit der Messer (21, 22, 23, 24, 55, 57) und Auswerferflügel (25, 59) drehfest verbunden sind, einem auf dem Messergehäuse sitzenden Füllschacht (26) für das häckselfähige Gut und einem Einführstutzen (28) für das schnitzelfähige Gut, der unter Bildung eines spitzen Winkels mit der Messerwelle durch die Umfangswand (29) des Messergehäuses hindurchgeführt ist und dicht oberhalb einer Schnitzelmesseranordnung (21, 55, 57) endet, dadurch gekennzeichnet, daß das Messergehäuse (17) in eine Zerkleinerungsgut nur von dem Füllschacht (26) übernehmende Häckselkammer (18) und eine darunter angeordnete, mit Zerkleinerungsgut nur über den Einführstutzen (28) zu beschickende Schnitzelkammer (19) unterteilt ist, sowie daß die Messerwelle (15) eine in der Häckselkammer rotierende Häckselmesseranordnung (22, 23, 24) sowie die in der Schnitzelkammer umlaufende Schnitzelmesseranordnung (21, 55, 57) trägt.

2. Vorrichtung nach Anspruch 1, dadurch gekennzeichnet, daß die Häckselkammer (18) und die Schnitzelkammer (19) mit einem gemeinsamen Auswurfstutzen (31) in Verbindung stehen.

3. Vorrichtung nach Anspruch 1 oder 2, dadurch gekennzeichnet, daß die Häckselkammer (18) und die Schnitzelkammer (19) durch einen gehäusefesten Zwischenboden (20) voneinander getrennt sind, der die Lagerung (16) für die Messerwelle (15) trägt.

4. Vorrichtung nach Anspruch 3, dadurch gekennzeichnet, daß der die beiden Kammern (18, 19) trennende Zwischenboden (20) im Bereich (32) der Übergangsstelle zwischen Messergehäuse (17) und Auswurfstutzen (31) unter Vergrößerung des Gutauslasses (33) der Häckselkammer (18) abgesenkt ist.

5. Vorrichtung nach einem der Ansprüche 1 bis 4, dadurch gekennzeichnet, daß die Messerwelle (15) Lüfterflügel (25, 59) zur Ausübung eines Sogs auf das in das Messergehäuse (17) einlaufende Gut trägt.

6. Vorrichtung nach Anspruch 5, dadurch gekennzeichnet, daß die Auswerferflügel (25, 59) als Lüfterflügel ausgebildet sind.

7. Vorrichtung nach einem der Ansprüche 1 bis 6, dadurch gekennzeichnet, daß die Messerwelle (15) über einen Keilriemen (12) und eine auf der Messerwelle befestigte Keilriemenscheibe (14) angetrieben ist und die Keilriemenscheibe der Messerwelle innerhalb der Schnitzelkammer (19) zwischen der Lagerung (16) der Messerwelle und der Schnitzelmesseranordnung (21, 55, 57) sitzt.

8. Vorrichtung nach Anspruch 7, dadurch gekennzeichnet, daß die Häckselmesseranordnung (22, 23, 24) und die Schnitzelmesseranordnung (21, 55, 57) auf die gegenüber-

liegenden Enden der Messerwelle (15) lösbar aufgesetzt sind.

9. Vorrichtung nach einem der Ansprüche 1 bis 8, dadurch gekennzeichnet, daß die Häckselmesseranordnung (22, 23, 24) einen Vorzerkleinerer (22) und mindestens eine Flachmessergruppe (23, 24) aufweist, die in in Abstand voneinander angeordneten Ebenen rotieren.

10. Vorrichtung nach einem der Ansprüche 1 bis 9, dadurch gekennzeichnet, daß die Schnitzelmesseranordnung (21) als Flachmesser oder Flachmessersatz ausgebildet ist, und daß in vorbestimmtem Abstand unterhalb des untersten Endes des Einführstutzens (18) und der Bewegungsbahn der Schnitzelmesseranordnung ein gehäusefester Schnittbegrenzungsanschlag (54) angeordnet ist.

11. Vorrichtung nach einem der Ansprüche 1 bis 9, dadurch gekennzeichnet, daß die Schnitzelmesseranordnung (55, 57) eine Messerscheibe (55) mit Durchtrittsschlitzen (56) für das Schnitzelgut aufweist.

12. Vorrichtung nach einem der Ansprüche 1 bis 11, dadurch gekennzeichnet, daß die Schnitzelkammer (19) einen abklappbaren oder abnehmbaren Boden (30) aufweist.

13. Vorrichtung nach einem der Ansprüche 1 bis 12, dadurch gekennzeichnet, daß die Umfangswand (29) der Häckselkammer (18) an ihrer Innenseite dicht unterhalb der Häckselmesseranordnung (22, 23, 24) einen nach innen vorspringenden Häckselgut-Rückhalter (34) trägt.

14. Vorrichtung nach einem der Ansprüche 1 bis 13, dadurch gekennzeichnet, daß an der Innenseite der Umfangswand (29) der Häckselkammer (18) in Höhe der Häckselmesseranordnung (22, 23, 24) mindestens eine nach innen vorspringende Nase (40, 62) vorgesehen ist.

15. Vorrichtung nach Anspruch 14, dadurch gekennzeichnet, daß die Nase als Gegenmesser (62) ausgebildet und austauschbar und/oder um 180° wendbar angebracht ist.

16. Vorrichtung nach einem der Ansprüche 1 bis 15, dadurch gekennzeichnet, daß ein Teil der Umfangswand (29) des Messergehäuses (17) aufklappbar ausgebildet, der Auswurfstutzen (31) an dem aufklappbaren Teil (44) der Umfangswand (29) des Messergehäuses (17) befestigt und eine das Drehen der Messerwelle (15) bei geöffnetem Messergehäuse (17) verhindernde Sicherung (46, 47) vorgesehen ist.

17. Vorrichtung nach einem der Ansprüche 1 bis 16, dadurch gekennzeichnet, daß der Füllschacht (26) abklappbar angebracht und eine das Drehen der Messerwelle (15) bei Abklappen des Füllschachts verhindernde Sicherung (48, 67 bis 75, 78 bis 88) vorgesehen ist.

18. Vorrichtung nach Anspruch 16 oder 17, dadurch gekennzeichnet, daß die Sicherung einen beim Aufklappen des Umfangswandteils (44) und/oder beim Abklappen des Füllschachts (26) selbsttätig ansprechenden Endschalter (78) zum Ausschalten des Antriebes der Zerkleinerungsvorrichtung aufweist.

19. Vorrichtung nach Anspruch 18, dadurch gekennzeichnet, daß der Endschalter (78) mit einer mechanischen Verriegelung (81, 83, 84, 87) des aufklappbaren Umfangswandteils (44) und/oder des Füllschachts (26) derart gekoppelt ist, daß der Endschalter im Sinne einer Stillsetzung des Antriebes anspricht, bevor die Verriegelung den Füllschacht freigibt.

20. Vorrichtung nach einem der Ansprüche 1 bis 19, gekennzeichnet durch mindestens ein um eine einstellbare Quer- und/oder Längsstrecke in den Füllschacht (26) hineinreichendes Regulierelement (90), das mit Bezug auf den Füllschacht verschiebbar und in der gewünschten Stellung arretierbar geführt ist.

21. Vorrichtung nach einem der Ansprüche 1 bis 20 in schubkarrenartiger Ausbildung, mit Rädern und Griffen, dadurch gekennzeichnet, daß der Auswurf auf der Radseite angeordnet ist.

0099561

Fig. 1

Fig. 2

Fig. 3

Fig. 5

Fig. 4

0099561

Fig.6

Fig.7

Fig.8

22

17

15

31

25

20

28

IX

IX

12

57

59

55

Fig.9

57    60    56

55    15

58

57

56

28

0099561

Fig.10

Fig. 11

*Fig. 12*

Fig. 13

Fig. 14

Fig.15

26

92

91

90

90

93

22

15

23

Fig. 16